(19) **Europäisches Patentamt** / **European Patent Office** / **Office européen des brevets**

(11) **EP 3 211 572 A1**

(12) **EUROPEAN PATENT APPLICATION**

(43) Date of publication:
**30.08.2017 Bulletin 2017/35**

(21) Application number: **16203623.0**

(22) Date of filing: **13.12.2016**

(51) Int Cl.:
**G06Q 10/04** (2012.01)　　　**G06Q 10/06** (2012.01)
**G06Q 10/08** (2012.01)　　　**G06Q 10/10** (2012.01)
**G06Q 50/28** (2012.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.02.2016 JP 2016038142**

(71) Applicant: **Hitachi Solutions, Ltd.**
**Tokyo 140-0002 (JP)**

(72) Inventors:
- **HOSODA, Junko**
  **Chiyoda-ku, Tokyo 1008280 (JP)**
- **TERAZAKI, Yuuichi**
  **Shinagawa-ku, Tokyo 140-0002 (JP)**

(74) Representative: **Addiss, John William et al**
**Mewburn Ellis LLP**
**City Tower**
**40 Basinghall Street**
**London EC2V 5DE (GB)**

(54) **DEMAND-SUPPLY ADJUSTMENT DEVICE, DEMAND-SUPPLY ADJUSTMENT SYSTEM, AND DEMAND-SUPPLY ADJUSTMENT METHOD**

(57) Provided is a technology capable of assisting in execution of a more appropriate measure. A demand-supply adjustment device includes: a memory unit configured to store: production capacity information relating to production capacity of supply source site; profit allocation information relating to target values of profit allocation for respective sites including supply source site and order site; and measure information relating to plurality of measures against shortage of supply; a demand-supply adjustment unit configured to determine whether or not a shortage of supply is to occur by referring to production capacity information when receiving demand information relating to a demand quantity of product; and a measure combination extraction unit configured to, when a shortage of supply is determined to occur by demand-supply adjustment unit, calculate execution quantities in a case where the measure are executed and extract a combination of measure candidates by using the execution quantities and the target values.

FIG. 1

EP 3 211 572 A1

**Description**

Technical Field

The present invention relates to a demand-supply adjustment device, a demand-supply adjustment system, and a demand-supply adjustment method.

Background Art

In Patent Literature 1, there is disclosed a technology relating to an information processing device for assisting in stock adjustment among a plurality of products. In paragraph [0023] of Patent Literature 1, there is a description "In Step S5, the stock valuation adjustment system 9 executes improvement processing by adjusting stocks among a plurality of products". Further, in paragraph [0063], there is a description "In Step S83, the stock valuation adjustment unit 24 calculates appropriate stock for a product whose stock is to be reduced. Three examples of a preferred calculation method are given below. It is to be understood that the appropriate stock calculation method is not limited to those three methods. The first example of the preferred appropriate stock calculation method is a method that uses an allowable marginal stockout rate. This is a method of setting, as appropriate stock, safety stock that is calculated by the stock valuation adjustment unit 24 based on a maximally allowable stockout rate (allowable marginal stockout rate) set for each product or for each category. The second example of the preferred appropriate stock calculation method is a method of using, by the stock valuation adjustment unit 24, an opportunity loss to set a stock quantity whose opportunity loss is the minimum as appropriate stock. The opportunity loss is described later. The third example of the preferred appropriate stock calculation method is a method of using, by the stock valuation adjustment unit 24, a management CF to set a stock quantity whose management cash flow reflecting the opportunity loss (hereinafter referred to as "opportunity loss management CF") is the maximum as appropriate stock.

Citation List

Patent Literature

[PTL 1]     JP 2012-256369 A

Summary of Invention

Technical Problem

When there is a shortage of supply of a product compared to its demand, it is conceivable to take a measure such as increasing the supply by enhancing production capacity of a supply source or changing a delivery date. A measure to be adopted is desirably decided in view of costs that are incurred by respective sites, such as factories and wholesalers, through execution of the measure. The technology disclosed in Patent Literature 1 does not take the costs that are incurred by respective sites into consideration, and thus there may occur an imbalance of costs that are incurred by respective sites through execution of the measure.

The present invention has been made in view of the above, and aims to provide a technology capable of assisting in execution of a more appropriate measure at the time of a supply shortage.

Solution to Problem

The subject application includes a plurality of means for solving at least a part of the problem described above. Examples of those means are given as follows.

In order to solve the above-mentioned problem, according to one embodiment of the present invention, there is provided a demand-supply adjustment device, including: a memory unit configured to store: production capacity information relating to production capacity of a supply source site; profit allocation information relating to target values of profit allocation for respective sites including the supply source site and an order site; and measure information relating to a plurality of measures against a shortage of supply; a demand-supply adjustment unit configured to determine whether or not a shortage of supply is to occur by referring to the production capacity information when receiving demand information relating to a demand quantity of a product; and a measure combination extraction unit configured to, when a shortage of supply is determined to occur by the demand-supply adjustment unit, calculate execution quantities in a case where the measure contained in the measure information are executed and extract a combination of measure candidates by using the execution quantities and the target values.

Further, according to another embodiment of the present invention, there is provided a demand-supply adjustment system, including an order site terminal included in an order site and a demand-supply adjustment device that are connected to each other via a network, the order site terminal including a communication unit configured to transmit demand information relating to a demand quantity of a product to the demand-supply adjustment device, the demand-supply adjustment device including: a memory unit configured to store: production capacity information relating to production capacity of a supply source site; profit allocation information relating to target values of profit allocation for respective sites including the supply source site and the order site; and measure information relating to a plurality of measures against a shortage of supply; a demand-supply adjustment unit configured to determine whether or not a shortage of supply is to occur by referring to the production capacity information when receiving the demand information from the order site terminal; a measure combination extraction unit configured to, when a shortage of supply is determined to occur by the demand-supply adjustment unit, calculate execution quantities in a case where the measure are executed and extract a combination of measure candidates by using the execution quantities and the target values; and a display unit configured to display the combination of measure candidates on a combination list screen.

Further, according to another embodiment of the present invention, there is provided a demand-supply adjustment method to be performed by a demand-supply adjustment device, the demand-supply adjustment device including a memory unit, a demand-supply adjustment unit, a measure combination extraction unit, and a display unit, the memory unit being configured to store: production capacity information relating to production capacity of a supply source site; profit allocation information relating to target values of profit allocation for respective sites including the supply source site and an order site; and measure information relating to a plurality of measures against a shortage of supply, the demand-supply adjustment method including: executing, by the demand-supply adjustment unit, a demand-supply adjustment step of determining, when receiving demand information relating to a demand quantity of a product, whether or not a shortage of supply is to occur by referring to the production capacity information; executing, by the measure combination extraction unit, a measure combination calculation step of calculating, when a shortage of supply is determined to occur by the demand-supply adjustment unit, execution quantities in a case where the measure are executed, and extracting a combination of measure candidates by using the execution quantities and the target values; and executing, by the display unit, a display step of displaying the combination of measure candidates on a combination list screen.

Advantageous Effects of Invention

According to the present invention, it is possible to assist in execution of a more appropriate measure at the time of supply shortage.

Problems, configurations, and effects other than those described above are made clear from the following description of an embodiment of the present invention.

Brief Description of Drawings

FIG. 1 is a diagram for illustrating an outline of processing to be executed by a demand-supply adjustment system.
FIG. 2 is an exemplary functional block diagram of a demand-supply adjustment device.
FIG. 3 is a table for showing an exemplary data structure of demand information.
FIG. 4 is a table for showing an exemplary data structure of supply information.
FIG. 5 is a table for showing an exemplary data structure of profit allocation information.
FIG. 6 is a table for showing an exemplary data structure of production capacity information.
FIG. 7 is a table for showing an exemplary data structure of measure information.
FIG. 8 is a table for showing an exemplary data structure of production quantity information.
FIG. 9 is a table for showing an exemplary data structure of production capacity shortage information.
FIG. 10 is a table for showing an exemplary data structure of countermeasure information.
FIG. 11 is a diagram for illustrating an exemplary hardware configuration of the demand-supply adjustment device.
FIG. 12 is a flowchart for illustrating an example of demand-supply adjustment processing.
FIG. 13 is a diagram for illustrating an example of a profit allocation input screen.
FIG. 14 is a diagram for illustrating an example of a measure information input screen.
FIG. 15 is a diagram for illustrating an example of a combination list screen.
FIG. 16 is a diagram for illustrating an example of a combination detail screen.

Description of Embodiments

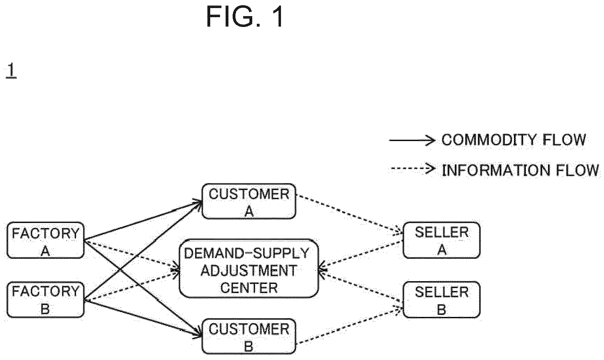

Now, an exemplary embodiment of the present invention is described with reference to the drawings. FIG. 1 is a diagram for illustrating an outline of processing to be executed by a demand-supply adjustment system 1. In FIG. 1, the solid arrow indicates a commodity flow, and the dotted arrow indicates an information flow.

A customer is a supply destination of a product, and sends an order of a product to a seller. The seller is a wholesaler or a retailer, and receives the order of a product from the customer. When a product is ordered, the seller sends information indicating the customer and a demand quantity to a demand-supply adj ustment center. A factory is a supply source of a product, and sends information indicating a supply quantity to the demand-supply adjustment center. Further, the factory supplies a product to the customer, which is a supply destination of the product. In the following, the word "site" is used for indicating any one of the factory, the seller, and the customer.

In some cases, there is a shortage of supply provided by the supply source compared to the demand quantity transmitted from the seller. In that case, various measures may be executed, such as enhancing production capacity by, for example, extending an operating period of a factory, changing a delivery date, and performing emergency transportation. When a certain measure is taken, costs are incurred by sites. In this case, costs include a value obtained by quantifying an intangible thing, such as a period of time taken to execute the measure or energy, as well as actually incurred expenses.

A demand-supply adjustment device installed in the demand-supply adjustment center has a set target value of profit allocation, which is a ratio of distribution of costs among respective sites. When a shortage of supply is detected, the demand-supply adjustment device calculates costs to be incur red by sites through execution of a measure, and identifies a combination of measure candidates each having a small gap (difference) between a profit allocation, which is given to each site and identified from the calculated cost, and a target value. The demand-supply adjustment device displays the identified combination of measure candidates together with costs to be incurred through execution of the measures.

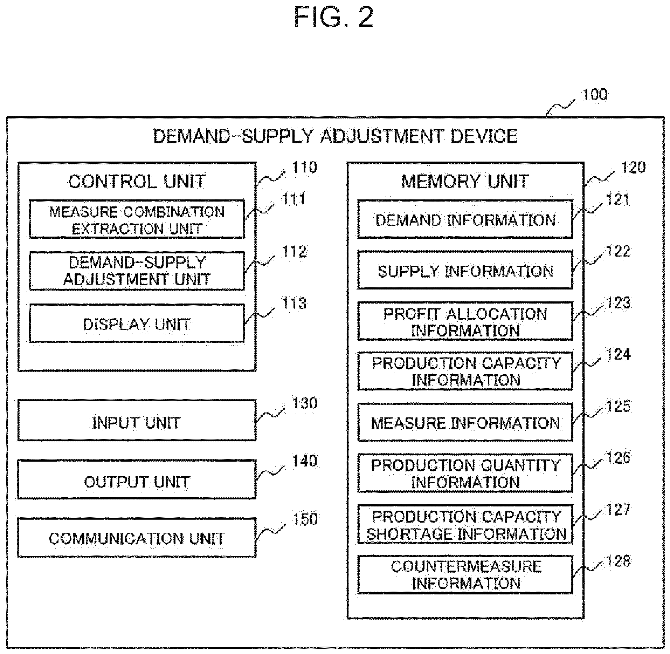

FIG. 2 is an exemplary functional block diagram of a demand-supply adjustment device 100. The demand-supply adjustment device 100 is an information processing device such as a PC, a server computer, or a smartphone. The demand-supply adjustment device 100 is installed in the demand-supply adj ustment center configured to adj ust a demand-supply quantity and its period for adjusting demand and supply of each site.

The demand-supply adjustment device 100 includes a control unit 110, a memory unit 120, an input unit 130, an output unit 140, and a communication unit 150. The control unit 110 is configured to integrally control the demand-supply adjustment device 100. The memory unit 120 is configured to store information to be used for demand-supply adjustment processing. The input unit 130 is configured to receive input of information through an input device described later, such as a keyboard or a touch panel. The output unit 140 is configured to output information via an output device described later. The communication unit 150 is configured to transmit or receive information to/from another device connected via a network, such as a production management device or a sales planning device described later.

The control unit 110 includes a measure combination extraction unit 111, a demand-supply adjustment unit 112, and a display unit 113. The measure combination extraction unit 111 identifies a production resource that becomes insufficient when a shortage of supply occurs. The production resource is, for example, production capacity or parts. The shortage of production capacity can be coped with through a measure such as enhancing the production capacity of a factory or changing a delivery date, and the shortage of parts can be coped with through a measure such as supplying parts or changing a delivery date. In the following, a description is given using an example of a case in which the production capacity becomes insufficient.

The measure combination extraction unit 111 is configured to calculate an execution quantity obtained by quantifying the effect of execution of a measure through use of an expression defined in advance for each measure. Further, the measure combination extraction unit 111 extracts a combination of measure candidates through use of an expression that sets, as an objective function, a gap between the profit allocation, which is given to each site and identified from the execution quantity, and the target value described above. The extraction of the measure candidate is described later in detail. Further, the measure combination extraction unit 111 calculates a measure combination cost, which is a total cost incurred when the measure combination extraction unit 111 executes the extracted combination of measure candidates.

The demand-supply adjustment unit 112 is configured to generate production quantity information containing production quantities of a product to be allocated to supply source sites through use of demand information relating to orders from a seller and production capacity information relating to production capacity of a factory serving as the supply source site. The demand-supply adjustment unit 112 uses a general method, e.g., liner programming, to allocate production quantities to the supply source sites.

Further, the demand-supply adjustment unit 112 uses the generated production quantity information and the production capacity information to determine whether or not a shortage of supply is to occur. When a shortage of supply is to occur, the demand-supply adjustment unit 112 generates production capacity shortage information described later.

The display unit 113 causes the output device to display a combination list screen for displaying a combination of measure candidates, and a combination detail screen for displaying each measure contained in the combination of measure candidates and the measure execution cost of each measure.

The memory unit 120 includes demand information 121, supply information 122, profit allocation information 123, production capacity information 124, measure information 125, production quantity information 126, production capacity shortage information 127, and countermeasure information 128. Among pieces of information stored in the memory unit 120, the production quantity information 126, the production capacity shortage information 127, and the countermeasure information 128 are information generated as a result of demand-supply adjustment processing executed by the demand-supply adjustment device 100.

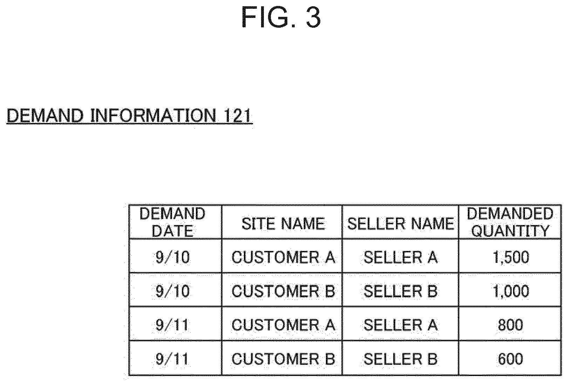

FIG. 3 is a table for showing an exemplary data structure of the demand information 121. Each record contained in the demand information 121 is transmitted from, for example, a sales planning device included in a seller. The demand information 121 is information generated for each ordered product, and contains a demand date, a site name, a seller name, and a demanded quantity.

The demand date is information for identifying a supply request date. The site name is identification information for identifying a supply destination site, which is an order site. The seller name is identification information for identifying a seller, which is an order site. The demanded quantity is information indicating a quantity of the ordered product. The demanded quantity may be referred to as "demand quantity".

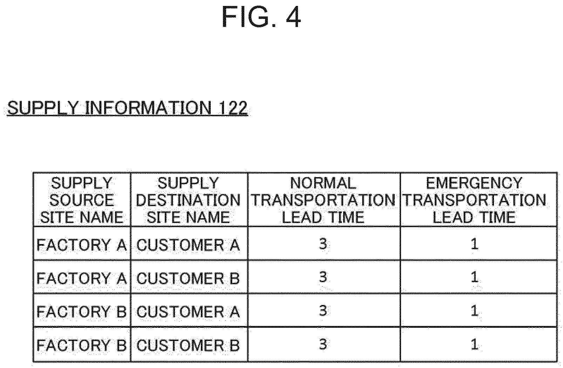

FIG. 4 is a table for showing an exemplary data structure of the supply information 122. The supply information 122 is, for example, information generated by the input unit 130 receiving input, and contains a supply source site name, a supply destination site name, a normal transportation lead time, and an emergency transportation lead time.

The supply source site name is identification information for identifying a supply source site, e.g., a factory. The supply destination site name is identification information for identifying a supply destination site, e.g., a customer. The normal transportation lead time is information indicating a period of time required to conduct normal transportation from a supply source site to a supply destination site. The emergency transportation lead time is information indicating a period of time required to conduct emergency transportation from a supply source site to a supply destination site. The emergency transportation is transportation conducted at a shorter lead time than that of normal transportation, which requires higher costs.

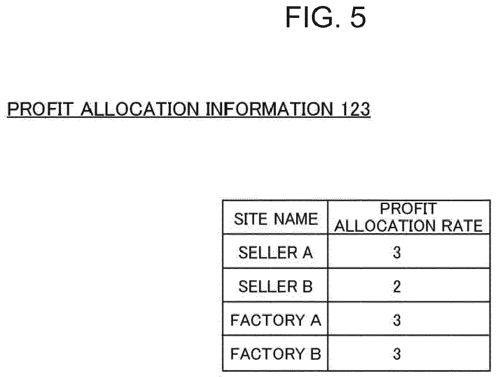

FIG. 5 is a table for showing an exemplary data structure of the profit allocation information 123. The profit allocation information 123 is information containing target values of profit allocation for respective sites including supply source sites and order sites, and is generated by, for example, the input unit 130 receiving input. The profit allocation information 123 may be information generated for each product supplied by a supply source site, or may be information generated for respective products in common. The profit allocation information 123 contains a site name and a profit allocation rate. The site name is identification information foridentifyingasite. The profit allocation rate is a target value of profit allocation for a site.

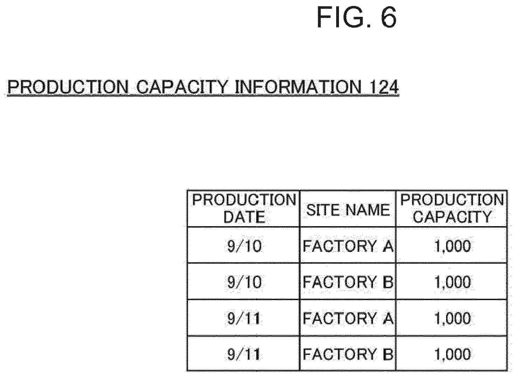

FIG. 6 is a table for showing an exemplary data structure of the production capacity information 124. The production capacity information 124 is information relating to production capacity of a supply source site. Each record contained in the production capacity information 124 is transmitted from, for example, a production management device included in a supply source site. The production capacity information 124 is information generated for each product, and contains a production date, a site name, and production capacity.

The production date is information indicating a date on which the supply source site conducts production. The site name is identification information for identifying a supply source site that produces a product. The production capacity is information indicating an upper limit value on a quantity of a product to be produced. The upper limit value does not contain a quantity of a product to be additionally produced through execution of a measure, e.g., extension of an operating period.

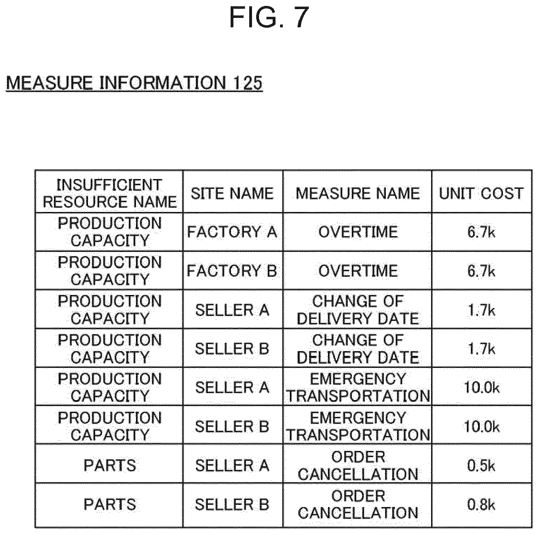

FIG. 7 is a table for showing an exemplary data structure of the measure information 125. The measure information 125 is information relating to a measure that may be executed at each site at the time of supply shortage. The measure information 125 is generated by, for example, the input unit 130 receiving input, and contains an insufficient resource name, a site name, a measure name, and a unit cost.

The insufficient resource name is information for identifying an insufficient production resource. The site name is identification information for identifying a site. The measure name is identification information for identifying a measure. The unit cost is a cost per unit to be incurred when the relevant measure is executed.

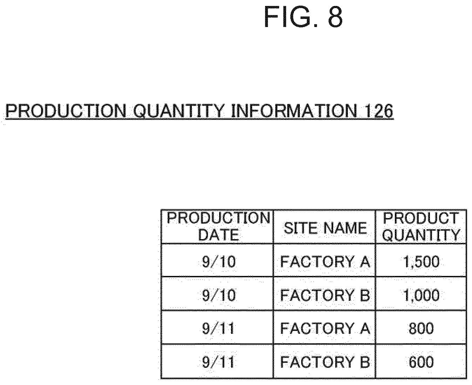

FIG. 8 is a table for showing an exemplary data structure of the production quantity information 126. The production quantity information 126 is information generated by the demand-supply adjustment unit 112 through use of the demand information 121 and the production capacity information 124, and contains, for example, a quantity of a product required of a supply source site to supply and a supply request date. The production quantity information 126 is generated for each product, and contains a production date, a site name, and a product quantity.

The production date is information indicating a supply request date. The site name is identification information for identifying a supply source site at which supply is requested. The production quantity is information indicating a requested supply quantity of a product.

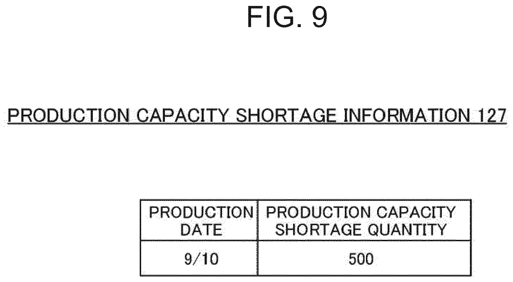

FIG. 9 is a table for showing an exemplary data structure of the production capacity shortage information 127. The production capacity shortage information 127 is information generated for each product in demand-supply adjustment processing described later, and contains a production date and a production capacity shortage quantity.

The production date is information indicating a date on which a shortage of supply occurs. The production capacity shortage quantity is information indicating a quantity of a product whose supply is insufficient. In other words, the production capacity shortage quantity is a value obtained by subtracting a value indicated by the production capacity contained in the production capacity information 124 from the demanded quantity contained in the demand information 121.

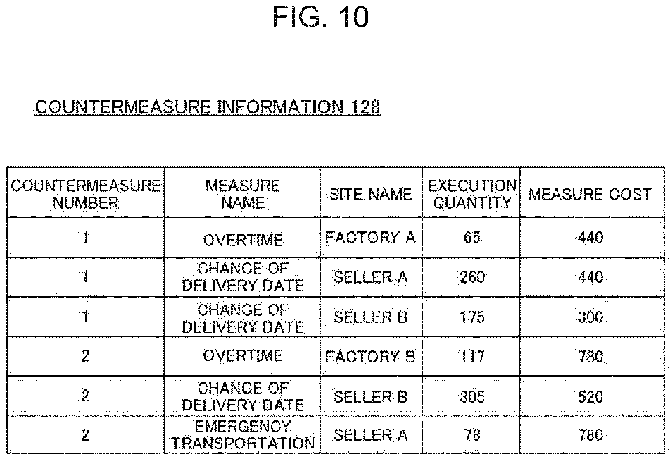

FIG. 10 is a table for showing an exemplary data structure of the countermeasure information 128. The countermeasure information 128 is information generated for each product in the demand-supply adjustment processing described later similarly to the production capacity shortage information 127. The countermeasure information 128 contains a countermeasure number, a measure name, a site name, an execution quantity, and a measure cost.

The countermeasure number is identification information for identifying a combination of measure candidates. The measure name is identification information for identifying a measure candidate contained in the combination. The site name is identification information for identifying a site at which the measure of a certain measure candidate is primarily executed. The execution quantity is information indicating a value obtained by quantifying the effect generated at a site through execution of a measure. The measure cost is information indicating a measure execution cost generated at a site through execution of a measure.

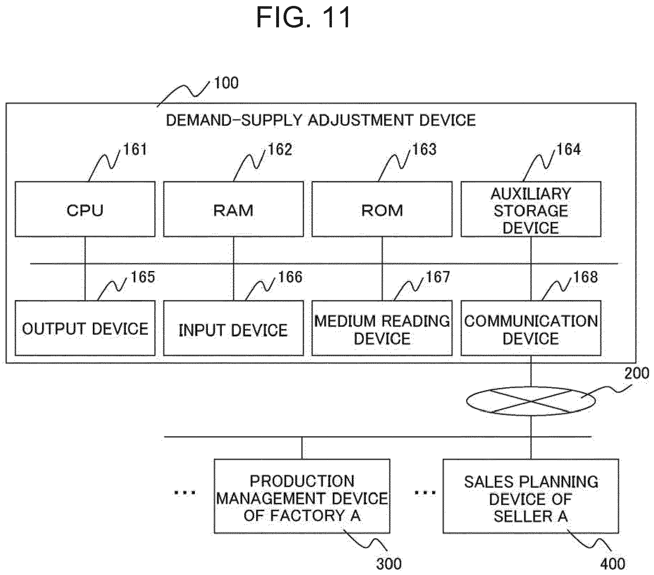

FIG. 11 is a diagram for illustrating an exemplary hardware configuration of the demand-supply adjustment device 100. The demand-supply adjustment device 100 includes a central processing unit (CPU) 161, a random access memory (RAM) 162, a read only memory (ROM) 163, an auxiliary storage device 164, an output device 165, an input device 166, a medium reading device 167, and a communication device 168. Those components are connected to one another via a bus.

The CPU 161 is a central processing device, and executes processing in accordance with a program recorded on the RAM 162, the ROM 163, or the auxiliary storage device 164. The CPU 161 executes a program, which causes the processing units forming the control unit 110 to implement respective functions.

The RAM 162 is a main memory device, and functions as a memory area into which a program or data is temporarily read. The ROM 163 is a non-volatile memory device from which information can be read. The auxiliary storage device 164 is a writable and readable storage device such as a hard disk drive (HDD), a flash memory, or a solid state drive (SSD).

The output device 165 is a device configured to output data stored in the demand-supply adjustment device 100, and is, for example, a display device such as a liquid crystal display (LCD), a cathode ray tube (CRT) display, or an organic electro luminescence (EL) display, or a printer. The input device 166 is a device configured to receive an input operation of a user, and is, for example, a touch panel, a keyboard, a mouse, or a microphone. The input device 166 may be used as the input unit 130, and the output device 165 may be used as the output unit 140.

The medium reading device 167 is a device configured to input and output information from a portable medium such as a compact disc (CD) or a digital versatile disc (DVD). The communication device 168 is a device for connecting the demand-supply adjustment device 100 to a network 200, and is a communication device, e.g., a network interface card (NIC). The network 200 is an information communication network, e.g., the Internet.

The function of the memory unit 120 is implemented by the RAM 162, the ROM 163, and the auxiliary storage device 164. Alternatively, the function of the memory unit 120 may be implemented by a memory device on the network 200.

Further, processing of each component of the demand-supply adjustment device 100 may be executed by a piece of hardware or may be executed by a plurality of pieces of hardware. Further, processing of each component of the demand-supply adjustment device 100 may be implemented by one program, or may be implemented by a plurality of programs.

Further, the demand-supply adjustment system 1 according to this embodiment is implemented by the demand-supply adjustment device 100, a production management device 300 included in a supply source site, and a sales planning device 400 included in an order site being connected to one another via the network 200. The hardware configurations of the production management device 300 and the sales planning device 400 are the same as that of the demand-supply adjustment device 100, and thus description thereof is omitted here. The communication device included in the sales planning device 400 implements the function of transmitting the demand information 121 to the demand-supply adjustment device 100 by the communication unit 150 (not shown).

Next, a description is given of the demand-supply adjustment processing to be executed by the demand-supply adjustment device 100.

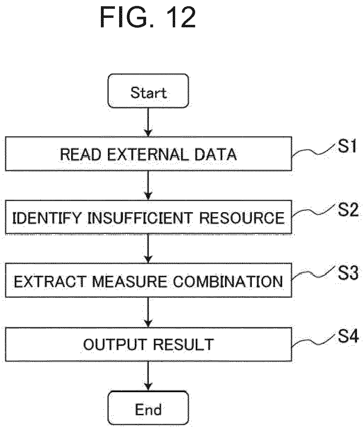

FIG. 12 is a flowchart for illustrating an example of the demand-supply adjustment processing. This processing is started by receiving input of a start instruction via, for example, the input unit 130.

First, the measure combination extraction unit 111 reads external data (Step S1). Specifically, the measure combination extraction unit 111 receives the demand information 121 from the communication unit (not shown) included in the sales planning device 400, and stores the demand information 121 into the memory unit 120. Further, the measure combination extraction unit 111 acquires the production capacity information 124 from the production management device 300, and stores the production capacity information 124 into the memory unit 120.

Next, the demand-supply adjustment unit 112 identifies an insufficient resource (Step S2). Specifically, the demand-supply adjustment unit 112 refers to the supply information 122 to identify a supply source site so as to satisfy the demanded quantity contained in the demand information 121. The demand-supply adjustment unit 112 generates the production quantity information 126 by assigning a product, which is required to be supplied, to a production site. The demand-supply adjustment unit 112 compares the production quantity contained in the production quantity information 126 with the production capacity contained in the production capacity information 124, and determines that a shortage of supply is to occur when the production quantity contained in the production quantity information 126 is larger. The following processing is performed for each product whose supply becomes insufficient.

The demand-supply adjustment unit 112 subtracts the production capacity contained in the production capacity information 124 from the production quantity contained in the production quantity information 126, to thereby identify the production capacity shortage quantity and generate the production capacity shortage information 127 in association with the date on which a shortage of supply occurs.

When the demand-supply adjustment unit 112 determines that a shortage of supply is to occur, the measure combination extraction unit 111 determines that the insufficient production resource is production capacity. When a value indicating a parts supply quantity (not shown) is smaller than a value indicating a parts demand quantity, the measure combination extraction unit 111 determines that the insufficient production resource is parts.

Next, the measure combination extraction unit 111 extracts a combination of measures (Step S3). Specifically, the measure combination extraction unit 111 refers to the measure information 125 and extracts a record associated with the insufficient production resource identified in Step S2. The measure combination extraction unit 111 uses an expression defined in advance for each measure to calculate an execution quantity of a measure identified through each extracted record.

For example, when the measure name is "extension of operating period", an operating period extension quantity, which is the execution quantity, is calculated using the following expression. The measure of "extension of operating period" is usually accompanied by overtime of a worker, and thus the operating period extension quantity can be referred to as "overtime quantity".

[Math. 1]

$$\sum_{P} XW_{s,p}^{t} = SW_{s}^{t}$$

···· Expression (1)

In Expression (1), p, t, s, $XW_{s,p}^{t}$, and $SW_{s}^{t}$ represent the type of a product, a date, a site, the production quantity of the product p at the site s on the date t, and the operating period extension quantity at the site s on the date t, respectively.

Further, for example, when the measure name is "change of delivery date", the delivery date change quantity, which is the execution quantity, is calculated using the following expression.

[Math. 2]

$$DM_{s,p}^{t} + BL_{s,p}^{t-1} = AX_{s,p}^{t} + BL_{s,p}^{t}$$

···· Expression (2)

In Expression (2), $DM_{s,p}^{t}$, $BL_{s,p}^{t}$, and $AX_{s,p}^{t}$ represent the demanded quantity of the product p at the site s on the date t, the delivery date change quantity of the product p at the site s on the date t, and the arrival quantity of the product p that arrives at the site s on the date t, respectively.

Further, for example, when the measure name is "emergency transportation", the arrival quantity, which is the execution quantity, is calculated using the following expression.

[Math. 3]

$$AX_{ts,p}^t = \sum_{fs} ES_{fs,ts,p}^{t-ELT_{fs,ts}} + \sum_{fs} NS_{fs,ts,p}^{t-LT_{fs,ts}}$$

···· Expression (3)

InExpression (3), $AX_{ts,p}^t$, $ELT_{fs,ts}$, $LT_{fs,ts}$, $ES_{fs,ts,p}^t$, and $NS_{fs,ts,p}^t$ represent the arrival quantity of the product p that arrives at the site s on the date t, the emergency transportation lead time from a site fs to a site ts, the normal transportation lead time from the site fs to the site ts, the emergency transportation quantity of the product p that is urgently transported from the site ts to the site fs on the date t, and the normal transportation quantity of the product p that is normally transported from the site ts to the site fs on the date t, respectively.

The following objective function is used to calculate a gap between a profit allocation obtained by distributingprofits (costs), which are generated at respective sites through execution of a measure, and a profit allocation rate, which is the target value of the profit allocation information 123. The following objective function has the minimized gap as an optimum solution.

[Math. 4]

$$\min \quad DMAX$$

$$DJ_{a1,a2} \leq DMAX$$

$$Obj_{a1} - \alpha_{a1,a2} \times Obj_{a2} \leq DJ_{a1,a2}$$

$$-Obj_{a1} + \alpha_{a1,a2} \times Obj_{a2} \leq DJ_{a1,a2}$$

$$\alpha_{a1,a2} = \beta_{a2}/\beta_{a1}$$

$$Obj_{a1} = \sum_{s \in a} \sum_{p} \sum_{t} (CSW_s \times SW_s^t)$$

$$+ \sum_{fs \in a} \sum_{ts \in a} \sum_{p} \sum_{t} (CES_{ts} \times ES_{fs,ts,p}^t)$$

$$+ \sum_{s \in a} \sum_{p} \sum_{t} (CBL_s \times BL_{s,p}^t)$$

···· Expression (4)

···· Expression (5)

···· Expression (6)

···· Expression (7)

···· Expression (8)

···· Expression (9)

InExpressions (4) to (9), DMAX, $DJ_{a1,a2}$, $Obj_a$, $\alpha_{a1,a2}$, $\beta_a$, $CSW_s$, $CES_s$, and $CBL_s$ represent the maximum value of the gaps between the profit allocations generated at respective sites and the profit allocation rates of the profit allocation information 123, the value of a gap between the profit allocation among a site a1 and a site a2 and the profit allocation rate of the profit allocation information 123, the profit generated forasitea through execution of a measure, the profit allocation rate of the profit allocation information 123 between the site a1 and the site a2, the profit allocation rate of the profit allocation information 123 at the site a, the unit cost to be incurred by enhancing production capacity at the site s, the unit cost to be incurred by emergency transportation to the supply destination site s, and the unit cost to be incurred by changing the delivery date at the site s, respectively.

The measure combination extraction unit 111 solves a simultaneous equation indicating the above-mentioned objective function, to thereby extract a predetermined number of combinations of measure candidates. For example, the measure combination extraction unit 111 extracts a predetermined number of combinations of measure candidates in ascending order of the gap from among combinations of measure candidates having positive gaps. The measure combination extraction unit 111 may extract all the combinations of measure candidates having gaps within a threshold range defined in advance.

When a combination of measure candidates is extracted, the measure combination extraction unit 111 uses any one of Expressions (1) to (3) described above for each extracted measure candidate to calculate the execution quantity. Further, the measure combination extraction unit 111 uses Expression (9) described above for each measure candidate to calculate the measure execution cost. The measure combination extraction unit 111 associates the measure candidate contained in the combination and the measure execution cost with each other for each extracted combination of measure candidates to generate the countermeasure information 128, and stores the countermeasure information 128 into the memory unit 120.

In this embodiment, a description is given using "extension of operating period", "change of delivery date", and "emergency transportation" as examples of the measure, but the measure is not limited thereto. The measure may be one in which the measure execution cost can be calculated.

Further, in this embodiment, the measure combination extraction unit 111 sets each site contained in the demand information 121 of a product whose supply becomes insufficient as an extraction target of the measure candidate. However, the measure combination extraction unit 111 may receive a selection of a site as the extraction target of the measure candidate.

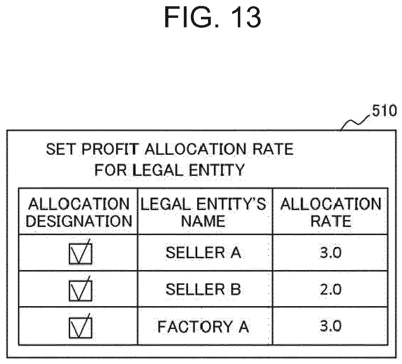

FIG. 13 is a diagram for illustrating an example of a profit allocation input screen 510. The profit allocation input screen 510 displays a checkbox configured to receive an indication of whether or not to apply allocation, a legal entity's name, which is the name of a site, and an allocation rate. The display unit 113 uses the profit allocation information 123 to cause the profit allocation input screen 510 to display the legal entity's name and the allocation rate.

Prior to the start of processing of Step S3, the selection of a site to be used for extracting a combination of measure candidates is received through the profit allocation input screen 510, and sites that are not selected are set outside the scope of a measure candidate. Through this processing, it is possible to assist in execution of a measure having reflected the intention of the user by, for example, setting a desired site outside the scope of execution of a measure.

Further, in Step S3, the execution quantity is calculated for each measure contained in the measure information 125 to calculate the gap and extract a combination of measure candidates. However, measures to be used for calculating the execution quantity may be input.

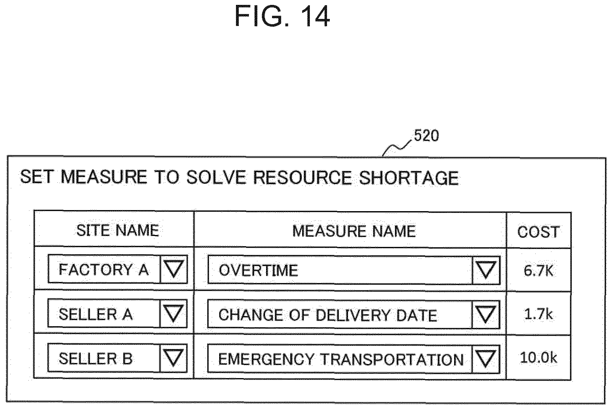

FIG. 14 is a diagram for illustrating an example of a measure information input screen 520. The display unit 113 generates screen information of the measure information input screen 520 that displays the site name and the measure name in a selectable manner. When a selected combination of the site name and the measure name is contained in the measure information 125, the display unit 113 causes the measure information input screen 520 to display the unit cost associated with the combination in the measure information 125.

The measure information input screen 520 may display a measure identified through each record contained in the measure information 125 in a selectable manner. The measure combination extraction unit 111 calculates the execution quantity for each measure that is generated or selected through the measure information input screen 520, to thereby extract a combination of measure candidates.

Returning to the description of FIG. 12, the measure combination extraction unit 111 next outputs a result (Step S4). After that, the control unit 110 ends the processing of this flowchart.

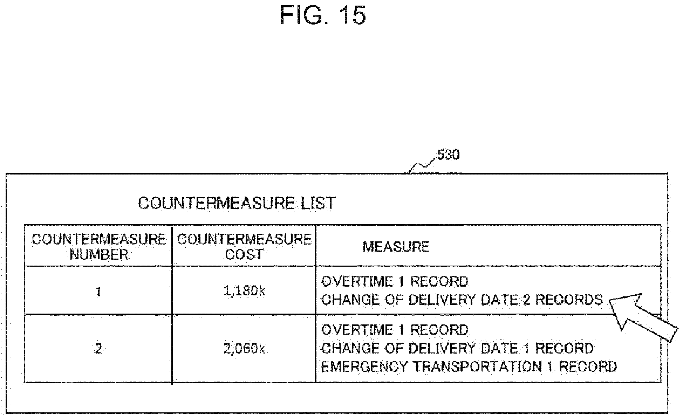

FIG. 15 is a diagram for illustrating an example of a combination list screen 530. The combination list screen 530 is a screen for displaying the combination of measure candidates extracted in Step S3. The combination list screen 530 contains a countermeasure number, a countermeasure cost, and a measure. The countermeasure number is identification information for identifying the combination of measure candidates extracted in Step S3. The countermeasure cost is a measure combination cost generated by a combination of measure candidates. The measure combination extraction unit 111 adds up the measure execution costs of measure candidates contained in the extracted combination, and calculates the measure combination cost. The countermeasure is measure candidates forming a combination of measure candidates.

Through this screen, it is possible to grasp contents of measures forming each combination and its incurred countermeasure execution cost in a list form, to thereby improve convenience for a person who decides a countermeasure.
The combination of the countermeasure number, the countermeasure cost, and the measures contained in the combination list screen 530 is selectable. When a combination is selected, the display unit 113 displays the combination detail screen 540.

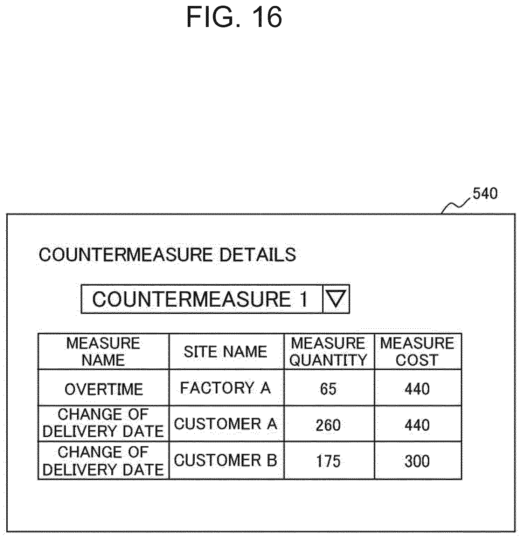

FIG. 16 is a diagram for illustrating an example of the combination detail screen 540. The combination detail screen 540 is a screen for displaying information relating to measure candidates contained in the combination selected in the combination list screen 530. The combination detail screen 540 contains a measure name, a site name, a measure quantity, and a measure cost.
The measure name is identification information for identifying the measure candidate. The site name is identification information for identifying a site at which the measure is executed. The measure quantity is an execution quantity of a case in which the relevant measure is executed, and corresponds to the execution quantity contained in the countermeasure information 128. The measure cost is a measure execution cost, and corresponds to the measure cost contained in the countermeasure information 128.
In this embodiment, at the time of a supply shortage, a combination of measure candidates is extracted in accordance with the profit allocation rate, and thus it is possible to execute measures that consider cost allocations among respective sites at which those measures are executed. Further, the extracted combination of measure candidates and its cost are displayed in a list form, and thus it is possible to select an appropriate combination of measure candidates depending on the cost. With this, it is possible to assist in determination of measures that appropriately allocate profits to respective sites.

<First Modified Example>

In the embodiment described above, a simultaneous equation indicating the objective function is solved to extract a combination of measure candidates based on the gap between the profit allocation for each site and the profit allocation rate of the profit allocation information 123. In a first modified example of the present invention, the combination of measure candidates is extracted based on the gap and the measure execution cost calculated for each measure. In the following, a description is given of a difference between the embodiment described above and the modified example.
In this modified example, the gap and the measure combination cost obtained by adding up measure execution costs are used to extract a combination of measure candidates. The measure combination extraction unit 111 uses measure execution costs to extract a combination of measure candidates from among combinations of measure candidates having high evaluation values of the above-mentioned objective function. For example, the measure combination extraction unit 111 extracts combinations of measures whose calculated gaps fall below a threshold value set in advance, and calculates the measure combination cost for each combination. The measure combination extraction unit 111 extracts a predetermined number of combinations of measure candidates having low measure combination costs.
The method of extracting a combination of measure candidates is not limited thereto, and any method may be employed as long as the gap and the measure combination cost are used to extract a preferable combination. With this, it is possible to assist in determination of a combination of measure candidates having the smallest cost possible that is generated through execution of measures while achieving a preferable profit allocation for each site with respect to the profit allocation rate.

<Second Modified Example>

In a second modified example of the present invention, the gap and an indicator defined in advance for each measure are used to extract a combination of measure candidates. The indicator is numerical information, for example, a value indicating practicability of a measure. The measure information in this embodiment (not shown) contains the indicator in each record.
The measure combination extraction unit 111 uses indicators to extract a combination of measure candidates from among combinations of measures having high evaluation values of the above-mentioned objective function. For example, the measure combination extraction unit 111 extracts a combination of measures whose calculated gaps fall below a threshold value set in advance, and adds up indicators of respective measures contained in the combination to calculate a measure combination indicator. The measure combination extraction unit 111 extracts a predetermined number of combinations of measure candidates having preferable measure combination indicators.
Similarly to the first modified example, the method of extracting a combination of measure candidates is not limited thereto, and any method may be employed as long as the gap and the indicator included in each measure are used to extract a preferable combination. Further, the gap, the indicator, and the measure combination cost may be used to extract a preferable combination.
With this, it is possible to extract a combination of measure candidates considering other influences that are generated through execution of a measure, e.g., practicability of the measure, while achieving a preferable profit allocation for each site with respect to the profit allocation rate.

In the above, a description has been given of each embodiment and modified example according to the present invention. However, the present invention is not limited to the exemplary embodiment described above and contains various modified examples. For example, the exemplary embodiment described above has been described in detail for easy understanding of the present invention, but the present invention is not limited to the embodiment including all the components described herein. Further, a part of a component of a certain exemplary embodiment can be replaced with a component of another exemplary embodiment. Further, a component of a certain exemplary embodiment can be added to a component of another exemplary embodiment. Further, addition, deletion, or replacement of another component can be carried out for a part of a component of each exemplary embodiment. Further, for example, each component, function, processing unit, or processing means described above may be implemented by hardware by, for example, designing a part or all thereof with, for example, an integrated circuit. Further, control lines and information lines in the drawings are illustrated for the sake of description, and all the lines are not necessarily illustrated. It may be considered that almost all the components are connected to one another.

Further, the functional configurations of the demand-supply adjustment device 100, the production management device 300, and the sales planning device 400 are classified in accordance with major processing specifics in order to facilitate understanding. The present invention is not limited by the manner of classification or name of each component. As described above, the configurations of the demand-supply adjustment device 100, the production management device 300, and the sales planning device 400 may be classified into a larger number of components depending on the processing specifics. Further, classification may be carried out such that one component executes more processing.

Reference Signs List

1: demand-supply adjustment system, 100: demand-supply adjustment device, 110: control unit, 111: measure combination extraction unit, 112: demand-supply adjustment unit, 113: display unit, 120: memory unit, 121: demand information, 122: supply information, 123: profit allocation information, 124: production capacity information, 125: measure information, 126:production quantity information, 127: production capacity shortage information, 128: countermeasure information, 130: input unit, 140: output unit, 150: communication unit, 161: CPU, 162: RAM, 163: ROM, 164: auxiliary storage device, 165: output device, 166: input device, 167: medium reading device, 168: communication device, 200: network, 300: production management device, 400: sales planning device, 510: profit allocation input screen, 520: measure information input screen, 530: combination list screen, 540: combination detail screen

**Claims**

1. A demand-supply adjustment device, comprising:

   a memory unit configured to store:

   production capacity information relating to production capacity of a supply source site;
   profit allocation information relating to target values of profit allocation for respective sites comprising the supply source site and an order site; and
   measure information relating to a plurality of measures against a shortage of supply;

   a demand-supply adjustment unit configured to determine whether or not a shortage of supply is to occur by referring to the production capacity information when receiving demand information relating to a demand quantity of a product; and
   a measure combination extraction unit configured to, when a shortage of supply is determined to occur by the demand-supply adjustment unit, calculate execution quantities in a case where the measure contained in the measure information are executed and extract a combination of measure candidates by using the execution quantities and the target values.

2. A demand-supply adjustment device according to claim 1, wherein the measure combination extraction unit is configured to extract the combination of measure candidates by using an expression that has the execution quantities as one of variables and has, as an objective function, gaps between profit allocations for the respective sites that are acquired from the execution quantities and the target values.

3. A demand-supply adjustment device according to claim 2, wherein the gaps comprise values obtained by subtracting the profit allocations for the respective sites from the target values, and
wherein the measure combination extraction unit is configured to extract a predetermined number of the combinations of measure candidates in ascending order of the gaps, which are positive values.

**4.** A demand-supply adjustment device according to claim 2, wherein the measure combination extraction unit is configured to calculate measure execution costs for the measure contained in the measure information, which are required for execution of the measure, and to extract the combination of measure candidates by using the gaps and the measure execution costs.

**5.** A demand-supply adjustment device according to claim 2, wherein the measure information comprises indicators indicating practicability of the plurality of measures, and
wherein the measure combination extraction unit is configured to extract the combination of measure candidates by using the gaps and the indicators.

**6.** A demand-supply adjustment device according to claim 1, further comprising a display unit configured to display a combination list screen that associates the extracted combination of measure candidates with a measure combination cost,
wherein the measure combination extraction unit is configured to calculate, for the extracted combination of measure candidates, the measure combination cost that is required for execution of the measure candidates relating to the extracted combination.

**7.** A demand-supply adjustment device according to claim 6,
wherein the combination list screen is configured to display the combination of measure candidates in a selectable manner, and
wherein the display unit is configured to, when the combination of measure candidates displayed on the combination list screen is selected, display a combination detail screen that indicates the measure candidates contained in the combination of measure candidates and measure execution costs that are required for execution of the measure candidates.

**8.** A demand-supply adjustment device according to claim 1,
wherein the measure information comprises production capacity enhancement, change of demand date, and emergency transportation in each of the plurality of measures, and
wherein the measure combination extraction unit is configured to calculate at least one of a production capacity enhancement quantity, a change of demand date quantity, or an emergency transportation quantity using a predetermined expression, and to calculate measure execution costs that are required for execution of the plurality of measures using the calculated quantity.

**9.** A demand-supply adjustment device according to claim 1, further comprising a display unit configured to display a profit allocation input screen configured to display the respective sites for input,
wherein the measure combination extraction unit is configured to extract measure candidates from among the plurality of measures for the respective sites selected on the profit allocation input screen.

**10.** A demand-supply adjustment device according to claim 1, further comprising a display unit configured to display a measure information input screen configured to display, for input, sites and measures to be used for the sites,
wherein the measure combination extraction unit is configured to calculate the execution quantities using the sites and the measures input on the measure information input screen.

**11.** A demand-supply adjustment system, comprising an order site terminal included in an order site and a demand-supply adjustment device that are connected to each other via a network,
the order site terminal comprising a communication unit configured to transmit demand information relating to a demand quantity of a product to the demand-supply adjustment device,
the demand-supply adjustment device comprising:

  a memory unit configured to store:

    production capacity information relating to production capacity of a supply source site;
    profit allocation information relating to target values of profit allocation for respective sites comprising the supply source site and the order site; and

measure information relating to a plurality of measures against a shortage of supply;

a demand-supply adjustment unit configured to determine whether or not a shortage of supply is to occur by referringtothe production capacityinformation when receiving the demand information from the order site terminal;

a measure combination extraction unit configured to, when a shortage of supply is determined to occur by the demand-supply adjustment unit, calculate execution quantities in a case where the measure are executed and extract a combination of measure candidates by using the execution quantities and the target values; and

a display unit configured to display the combination of measure candidates on a combination list screen.

12. A demand-supply adjustment method to be performed by a demand-supply adjustment device,

the demand-supply adjustment device comprising a memory unit, a demand-supply adjustment unit, a measure combination extraction unit, and a display unit,

the memory unit being configured to store:

production capacity information relating to production capacity of a supply source site;

profit allocation information relating to target values of profit allocation for respective sites comprising the supply source site and an order site; and

measure information relating to a plurality of measures against a shortage of supply,

the demand-supply adjustment method comprising:

executing, by the demand-supply adjustment unit, a demand-supply adjustment step of determining, when receiving demand information relating to a demand quantity of a product, whether or not a shortage of supply is to occur by referring to the production capacity information;

executing, by the measure combination extraction unit, a measure combination calculation step of calculating, when a shortage of supply is determined to occur by the demand-supply adjustment unit, execution quantities in a case where the plurality of measures are executed, and extracting a combination of measure candidates by using the execution quantities and the target values; and

executing, by the display unit, a display step of displaying the combination of measure candidates on a combination list screen.

# FIG. 1

1

COMMODITY FLOW
INFORMATION FLOW

CUSTOMER A

FACTORY A

DEMAND-SUPPLY ADJUSTMENT CENTER

SELLER A

FACTORY B

SELLER B

CUSTOMER B

# FIG. 2

~ 100

**DEMAND-SUPPLY ADJUSTMENT DEVICE**

**CONTROL UNIT** ~ 110

MEASURE COMBINATION EXTRACTION UNIT ~ 111

DEMAND-SUPPLY ADJUSTMENT UNIT ~ 112

DISPLAY UNIT ~ 113

INPUT UNIT ~ 130

OUTPUT UNIT ~ 140

COMMUNICATION UNIT ~ 150

**MEMORY UNIT** ~ 120

DEMAND INFORMATION ~ 121

SUPPLY INFORMATION ~ 122

PROFIT ALLOCATION INFORMATION ~ 123

PRODUCTION CAPACITY INFORMATION ~ 124

MEASURE INFORMATION ~ 125

PRODUCTION QUANTITY INFORMATION ~ 126

PRODUCTION CAPACITY SHORTAGE INFORMATION ~ 127

COUNTERMEASURE INFORMATION ~ 128

# FIG. 3

DEMAND INFORMATION 121

| DEMAND DATE | SITE NAME | SELLER NAME | DEMANDED QUANTITY |
|---|---|---|---|
| 9/10 | CUSTOMER A | SELLER A | 1,500 |
| 9/10 | CUSTOMER B | SELLER B | 1,000 |
| 9/11 | CUSTOMER A | SELLER A | 800 |
| 9/11 | CUSTOMER B | SELLER B | 600 |

# FIG. 4

SUPPLY INFORMATION 122

| SUPPLY SOURCE SITE NAME | SUPPLY DESTINATION SITE NAME | NORMAL TRANSPORTATION LEAD TIME | EMERGENCY TRANSPORTATION LEAD TIME |
|---|---|---|---|
| FACTORY A | CUSTOMER A | 3 | 1 |
| FACTORY A | CUSTOMER B | 3 | 1 |
| FACTORY B | CUSTOMER A | 3 | 1 |
| FACTORY B | CUSTOMER B | 3 | 1 |

# FIG. 5

PROFIT ALLOCATION INFORMATION 123

| SITE NAME | PROFIT ALLOCATION RATE |
|---|---|
| SELLER A | 3 |
| SELLER B | 2 |
| FACTORY A | 3 |
| FACTORY B | 3 |

FIG. 6

PRODUCTION CAPACITY INFORMATION 124

| PRODUCTION DATE | SITE NAME | PRODUCTION CAPACITY |
|---|---|---|
| 9/10 | FACTORY A | 1,000 |
| 9/10 | FACTORY B | 1,000 |
| 9/11 | FACTORY A | 1,000 |
| 9/11 | FACTORY B | 1,000 |

# FIG. 7

MEASURE INFORMATION 125

| INSUFFICIENT RESOURCE NAME | SITE NAME | MEASURE NAME | UNIT COST |
|---|---|---|---|
| PRODUCTION CAPACITY | FACTORY A | OVERTIME | 6.7k |
| PRODUCTION CAPACITY | FACTORY B | OVERTIME | 6.7k |
| PRODUCTION CAPACITY | SELLER A | CHANGE OF DELIVERY DATE | 1.7k |
| PRODUCTION CAPACITY | SELLER B | CHANGE OF DELIVERY DATE | 1.7k |
| PRODUCTION CAPACITY | SELLER A | EMERGENCY TRANSPORTATION | 10.0k |
| PRODUCTION CAPACITY | SELLER B | EMERGENCY TRANSPORTATION | 10.0k |
| PARTS | SELLER A | ORDER CANCELLATION | 0.5k |
| PARTS | SELLER B | ORDER CANCELLATION | 0.8k |

# FIG. 8

PRODUCTION QUANTITY INFORMATION 126

| PRODUCTION DATE | SITE NAME | PRODUCT QUANTITY |
|---|---|---|
| 9/10 | FACTORY A | 1,500 |
| 9/10 | FACTORY B | 1,000 |
| 9/11 | FACTORY A | 800 |
| 9/11 | FACTORY B | 600 |

# FIG. 9

PRODUCTION CAPACITY SHORTAGE INFORMATION 127

| PRODUCTION DATE | PRODUCTION CAPACITY SHORTAGE QUANTITY |
|---|---|
| 9/10 | 500 |

# FIG. 10

COUNTERMEASURE INFORMATION 128

| COUNTERMEASURE NUMBER | MEASURE NAME | SITE NAME | EXECUTION QUANTITY | MEASURE COST |
|---|---|---|---|---|
| 1 | OVERTIME | FACTORY A | 65 | 440 |
| 1 | CHANGE OF DELIVERY DATE | SELLER A | 260 | 440 |
| 1 | CHANGE OF DELIVERY DATE | SELLER B | 175 | 300 |
| 2 | OVERTIME | FACTORY B | 117 | 780 |
| 2 | CHANGE OF DELIVERY DATE | SELLER B | 305 | 520 |
| 2 | EMERGENCY TRANSPORTATION | SELLER A | 78 | 780 |

EP 3 211 572 A1

# FIG. 11

DEMAND-SUPPLY ADJUSTMENT DEVICE 100

161 CPU

162 RAM

163 ROM

164 AUXILIARY STORAGE DEVICE

165 OUTPUT DEVICE

166 INPUT DEVICE

167 MEDIUM READING DEVICE

168 COMMUNICATION DEVICE

200

PRODUCTION MANAGEMENT DEVICE OF FACTORY A 300

SALES PLANNING DEVICE OF SELLER A 400

# FIG. 12

```
        ┌──────────┐
        │  Start   │
        └──────────┘
             │
             ▼
┌──────────────────────────────┐
│      READ EXTERNAL DATA       │ ──── S1
└──────────────────────────────┘
             │
             ▼
┌──────────────────────────────┐
│ IDENTIFY INSUFFICIENT RESOURCE│ ──── S2
└──────────────────────────────┘
             │
             ▼
┌──────────────────────────────┐
│  EXTRACT MEASURE COMBINATION  │ ──── S3
└──────────────────────────────┘
             │
             ▼
┌──────────────────────────────┐
│         OUTPUT RESULT         │ ──── S4
└──────────────────────────────┘
             │
             ▼
        ┌──────────┐
        │   End    │
        └──────────┘
```

# FIG. 13

510

**SET PROFIT ALLOCATION RATE FOR LEGAL ENTITY**

| ALLOCATION DESIGNATION | LEGAL ENTITY'S NAME | ALLOCATION RATE |
|---|---|---|
| ☑ | SELLER A | 3.0 |
| ☑ | SELLER B | 2.0 |
| ☑ | FACTORY A | 3.0 |

# FIG. 14

520

SET MEASURE TO SOLVE RESOURCE SHORTAGE

| SITE NAME | MEASURE NAME | COST |
|---|---|---|
| FACTORY A ▽ | OVERTIME ▽ | 6.7K |
| SELLER A ▽ | CHANGE OF DELIVERY DATE ▽ | 1.7k |
| SELLER B ▽ | EMERGENCY TRANSPORTATION ▽ | 10.0k |

# FIG. 15

530

**COUNTERMEASURE LIST**

| COUNTERMEASURE NUMBER | COUNTERMEASURE COST | MEASURE |
|---|---|---|
| 1 | 1,180k | OVERTIME 1 RECORD<br>CHANGE OF DELIVERY DATE 2 RECORDS |
| 2 | 2,060k | OVERTIME 1 RECORD<br>CHANGE OF DELIVERY DATE 1 RECORD<br>EMERGENCY TRANSPORTATION 1 RECORD |

# FIG. 16

540

**COUNTERMEASURE DETAILS**

| COUNTERMEASURE 1 ▽ |
|---|

| MEASURE NAME | SITE NAME | MEASURE QUANTITY | MEASURE COST |
|---|---|---|---|
| OVERTIME | FACTORY A | 65 | 440 |
| CHANGE OF DELIVERY DATE | CUSTOMER A | 260 | 440 |
| CHANGE OF DELIVERY DATE | CUSTOMER B | 175 | 300 |

Europäisches
Patentamt

European
Patent Office

Office européen
des brevets

# EUROPEAN SEARCH REPORT

Application Number

EP 16 20 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/028418 A2 (SAP AG [DE]; HUBER-BUSCHBECK ANDREAS [DE]; VON HELMOLT HANS-ULRICH [DE]) 15 March 2007 (2007-03-15) * page 8, line 25 - page 14, line 20; figures 1-3 * ----- | 1-12 | INV. G06Q10/04 G06Q10/06 G06Q10/08 G06Q10/10 G06Q50/28 |

TECHNICAL FIELDS
SEARCHED      (IPC)

G06Q

The present search report has been drawn up for all claims

| Place of search | Date of completion of the search | Examiner |
|---|---|---|
| Munich | 9 March 2017 | Pastore, Edoardo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 20 3623

This annex lists the patent family members relating to the patent documents cited in  the above-mentioned European search report.
The members are as contained in the European Patent Office EDP file on
The European Patent Office is in no way liable for these particulars which are merely given for the purpose of information.

09-03-2017

| Patent document cited in search report | Publication date | Patent family member(s) | Publication date |
|---|---|---|---|
| WO 2007028418 A2 | 15-03-2007 | US 2008228604 A1<br>WO 2007028418 A2 | 18-09-2008<br>15-03-2007 |

EPO FORM P0459

For more details about this annex : see Official Journal of the European Patent Office, No. 12/82

**EP 3 211 572 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012256369 A